# EUROPEAN PATENT SPECIFICATION

(11) **EP 2 635 822 B1**
(45) Date of publication and mention of the grant of the patent: **08.05.2019**
(21) Application number: 11838865.1
(22) Date of filing: 04.11.2011
(51) Int. Cl.: F16C 29/04

(54) **SYSTEM, METHOD, AND APPARATUS FOR HOLDING A TRACK TO A BASE**
SYSTEM, VERFAHREN UND VORRICHTUNG ZUR BEFESTIGUNG EINER SCHIENE AUF EINER BASIS
SYSTÈME, PROCÉDÉ ET APPAREIL PERMETTANT DE MAINTENIR UN RAIL SUR UNE BASE

(30) Priority: 04.11.2010 US 939804
(43) Date of publication of application: 11.09.2013
(73) Proprietor: Bishop-Wisecarver Corporation, Pittsburg, CA 94565 (US)
(72) Inventor: WATSON, Nigel, S., Martinez CA 94553 (US)
(74) Representative: Stöckeler, Ferdinand
(86) International application number: PCT/US2011/059305
(87) International publication number: WO 2012/061693

(56) References cited:
- WO-A1-02/38473
- DE-A1- 4 109 286
- DE-A1- 4 109 286
- US-A- 3 848 388
- US-A- 3 848 388
- US-A- 5 482 026
- US-A1- 2010 150 484

## Description

### BACKGROUND OF THE INVENTION

### TECHNICAL FIELD

The invention relates generally to assembling a linear track in a guided motion system. In particular, the invention relates to a track assembly that supports a quick and easy method of assembly of linear tracks to standard base extrusions.

### DESCRIPTION OF THE PRIOR ART

In manufacturing processes and within manufactured capital goods themselves, precise and repeatable motion is useful and often essential. For example, in manufacturing processes ranging from machining to textiles to electronics, tool heads or other items move back and forth and must do so precisely and repeatedly over enormous numbers of cycles. In another example, specimens and instrumentation move relative to each other within laboratory analytic devices to collect data on the samples and must do so precisely and repeatedly.

Guide wheels attached to support bases and riding on rails are one class of guided motion technology that provides precise and repeatable kinematics. For example, U.S. Pat. No. 3,661,431 discloses guide wheels and tracks in which guide wheels cooperate with rails such that the guide wheels may move along the rails.

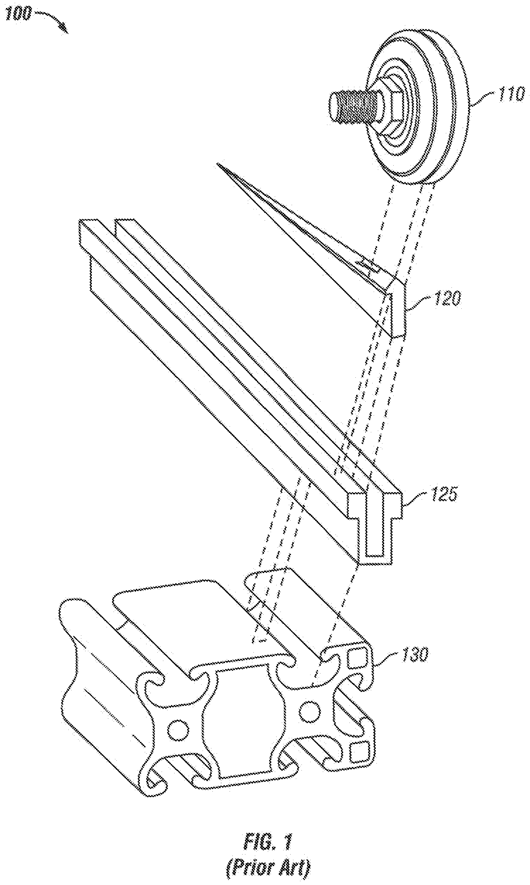

An exemplary track used in guided motion application is shown in Figure 1. Figure 1 illustrates an exploded view of a guided motion apparatus 100 as known in the prior art. Figure 1 shows a "Vee" edge track 120 and the DualVee® guide wheel 110 both manufactured by Bishop-Wisecarver Corporation. The track 120 is coupled with a support base 130. In preferred embodiments of the invention, the support base 130 comprises an extrusion.

Known support bases are typically available in a standard sizes and configurations. For example, the extrusion 130 shown in Figure 1 is a representation of a standard aluminum extrusion support base manufactured by Parker Hannifin Corporation, located in Cleveland, Ohio, which is widely used within the guided motion industry.

Also widely used in the guided motion industry are track assemblies for coupling the track with the support base. Figure 1 illustrates a known track assembly 125 for coupling the "Vee" edge track 120 to a standard extrusion 130. Previous attempts of providing track assemblies for standard support bases have been complicated, time consuming, difficult to assemble due to the requirement of fasteners, expensive to assemble, and unreliable due to the use of moving parts, among other shortcomings. Indeed, there are many disadvantages to the current state of the art.

Due to the deficiencies of the prior art, there is a need to provide a reliable, effective and easy to assemble track assembly for use with linear motion support bases. Therefore, there is a need to provide a track assembly that effectively couples with a standard support base.

There is also a need to provide methods of manufacturing track assemblies that effectively couple with a standard support base without the use of fasteners. Additionally, there is a need to provide methods of assembling guided motion systems using fastener-less assembly techniques.

Likewise, in applications in which the use of fasteners is preferable, there is a need for uncomplicated, easy-to-assemble, reconfigurable, and universal faster systems.

One drawback of the prior art is that linear guide tracks that utilize fasteners and track assemblies are designed for use with a particular base extrusion. For example, many known linear guide tracks are specifically designed to work with the various T-slot extrusions manufactured by Parker Hannifin Corporation, located in Cleveland, Ohio. However, the specifically designed track assemblies are useless with other extrusion bases or configurations. Therefore, there is a need in the art for a track assembly that is universally useful in any extrusion having a T-slot configuration.

Another drawback to the prior art is that known solutions oftentimes require that the end user cut, drill, or otherwise machine a set of work pieces to initially configure a linear guide system. This is problematic for end users who do not possess a sophisticated machine shop or for those who do not possess the requisite skill to fabricate the required materials.

Furthermore, pre-drilled track is very expensive and requires a user to layout the substrate to which the track is to be assembled in advance. This too is problematic because the user must be especially precise and must have detailed plans well in advance. Moreover, once one particular setup is configured, it cannot be reconfigured without taking apart the entire system and re-drilling.

Another drawback to current linear motion systems is the width profile of a track assembly. For example, known linear motion guides are bulky.

Another significant drawback of the known art is that drilling track and attaching it to a substrate with a plurality of individual fasteners oftentimes results in undulations and imperfections in the linear track. These undulations can negatively affect the entire system.

Likewise, it is difficult to maintain parallelism of the tracks when simply drilling a track down. Oftentimes, parallelism in the tracks is of the utmost importance. For example, a track that even one-one thousandth of an inch off-parallel can negatively affect the performance of an entire linear motion system.

Some other prior art solutions include simply placing a track directly into a T-slot of a base support extrusion. These known solutions oftentimes result in an unacceptably imprecise fit. For example, commercially available base support extrusions will vary in T-slot width for any given mill run. Therefore, a track having a uniform width will either fit too tightly or too loosely within the extrusion's T-slot. Therefore, there is a need to provide a track support extrusion that can reliable accommodate a standard-sized track despite the occasion of small size variances.

US 2010/150484 A1 discloses a system for holding a track to a base. Bolt-on clamp extrusions for fastening a track to support base extrusion are disclosed for providing a reconfigurable solution for reliable linear motion track assembly. A back-to-back track configuration provides a low-profile track assembly. Base extrusions include deformable fingers disposed in the slot to ensure proper fit despite a variance in track size. US 2010/150484 A1 discloses a system comprising the features of the preamble of claim 1.

### SUMMARY OF THE INVENTION

The invention provides novel approaches to manufacturing and assembling linear motion slides that are quick and easy to install. The invention provides a system for securing a linear motion guide track according to claim 1, and a method of securing a linear motion guide track according to claim 11. Some embodiments of the invention involve a track assembly apparatus that couples with standard linear motion support bases without the use of fasteners.

The elimination of fasteners results in lower cost, faster assembly, and increased structural integrity due to the elimination of drill holes and tapped holes in the track. According to some embodiments of the present invention, traditional fasteners are replaced with an assembly having deformable teeth protrusions.

Some embodiments of the invention utilize track clamps having a pressure insert portion with teeth protrusions that deform upon coupling with the support base. The deformation of the track clamp teeth ensures a tight fit without the use of fasteners.

Various embodiments of the invention include track assemblies designed to couple tracks to support bases in a variety of configurations including tracks disposed normal to the support base and tracks disposed orthogonal to the support base. In some embodiments of the present invention, the track clamps are designed with shoulder extensions to provide extra support withstand torque on the track.

In some embodiments of the invention, the track clamp apparatus is especially designed to suit any slot in a wide variety of extrusions or barstock material. In the preferred embodiment of the present invention, the track clamp enables the user to integrate the "Vee" edge track manufactured by Bishop-Wisecarver Corporation, located in Pittsburg, California, into the T-slots of standard structural extrusion support bases.

Some embodiments of the invention teach low cost methods of installing linear motion tracks into structural extrusion support bases. In some embodiments, the novel track clamp is simply installed using a soft-headed mallet. In some other embodiments, the track is able to be installed by using a cross-head arrangement of rollers to uniformly apply force to insert the track clamp and track into standard structural extrusion support bases.

In some embodiments, the track clamp and track are assembled in a factory. In some other embodiments, the track and track clamp are assembled on-site by an end user.

In some embodiments of the invention, the track clamps are integrated with widely available standard aluminum extrusion support bases such as those manufactured by Parker Hannifin Corporation, located in Cleveland Ohio. In some embodiments of the present invention, the track clamps are especially designed to accommodate various sized "Vee" edge tracks manufactured by Bishop-Wisecarver Corporation, located in Pittsburg, California. For example, in some embodiments, the track clamp is designed for tracks sized 0 thru 4, in carbon steel or stainless steel. In some embodiments of the invention, the track and track assembly are chosen to be used with "DualVee"® guide wheels (preferably in steel or stainless steel), manufactured by Bishop-Wisecarver Corporation, located in Pittsburg, California.

In some embodiments of the present invention, methods of manufacturing track clamps having deformable teeth extrusions are disclosed.

In some manufacturing applications that require linear track, the use of basic fasteners is preferred to fastener-less couplings. Some embodiments of the invention include a bolt-on clamp track assembly for housing a track and coupling with a support base extrusion. These solutions provide customers with a simple-to-assemble, customizable, reconfigurable, and user-friendly solution for reliable track assembly.

Some other embodiments include a back-to-back track configuration that is coupled to a proprietary base extrusion using clamping washers. These solutions are also user-friendly and convenient, and they also save space.

In yet other embodiments, a custom made extrusion includes deformable fingers in a T-slot for handling track width variance and resisting the removal of the track.

Some embodiments of the invention involve an assembly for coupling a track with a base extrusion via a support extrusion and a wedge assembly. Some other embodiments of the invention involve a double-edged support extrusion for coupling a track with a guide wheel via a wedge assembly according to some embodiments of the invention.

### BRIEF DESCRIPTION OF THE DRAWINGS

Figure 1 is an exploded view of a guided motion assembly requiring fasteners previously known in the art;
Figure 2A illustrates an end view of a fastener-less track assembly according to a comparative example useful for understanding the invention;
Figure 2B illustrates an isometric view of a fastener-less track assembly according to a comparative example useful for understanding the invention;
Figure 2C is an exploded view of a guided motion assembly without requiring fasteners according to a comparative example useful for understanding the invention;
Figure 3A illustrates an end view of a support base extrusion coupled with a pair of linear motion tracks via fastener-less track assemblies according to a comparative example useful for understanding the invention;
Figure 3B illustrates process steps for a method of manufacturing a guided motion system according to a comparative example useful for understanding the invention;
Figure 4 illustrates a side view of an alternative support base extrusion coupled with a pair of linear motion tracks via fastener-less track assemblies according to a comparative example useful for understanding the invention;
Figure 5 illustrates a side view of an alternative support base extrusion coupled with a pair of linear motion tracks via fastener-less track assemblies according to a comparative example useful for understanding the invention;
Figure 6 illustrates a side view of an alternative support base extrusion coupled with a linear motion tracks via fastener-less track assemblies according to a comparative example useful for understanding the invention;
Figure 7A is a schematic isometric representation of the bolt-on clamp extrusion and a track according to a comparative example useful for understanding the invention;
Figure 7B is an end view of the bolt-on clamp extrusion according to a comparative example useful for understanding the invention;
Figure 7C is an exploded view of a support base extrusion and two bolt-on clamp extrusions according to a comparative example useful for understanding the invention;
Figure 7D is a schematic representation of a nut used in a bolt-down clamp assembly according to a comparative example useful for understanding the invention;
Figure 7E is an end-view of an assembled track system with bolt-on clamp extrusions coupled with support base extrusions according to a comparative example useful for understanding the invention;
Figure 7F is an exploded view of an assembled track system capable of being coupled with a slidable beam extrusion via a plurality of guide wheel assemblies according to a comparative example useful for understanding the invention;
Figure 8A is an exploded view of a back-to-back track assembly according to a comparative example useful for understanding the invention;
Figure 8B is an isometric representation of a retaining washer according to a comparative example useful for understanding the invention;
Figure 8C illustrates an end view of a coupled back-to-back track assembly according to a comparative example useful for understanding the invention;
Figure 8D is an exploded view of an assembled track system capable of being coupled with a slidable beam extrusion via a plurality of guide wheel assemblies according to a comparative example useful for understanding the invention;
Figure 9A is an example of a support base extrusion with a plurality of deformable fingers disposed in the slot with a track inserted therein according to a comparative example useful for understanding the invention;
Figure 9B is an alternate example of a support base extrusion with a plurality of deformable fingers disposed in the slot with a track inserted therein according to a comparative example useful for understanding the invention; and
Figure 10A illustrates a side view of an assembly for coupling a track with a base extrusion via a support extrusion and a wedge assembly according to some embodiments of the invention;
Figure 10B illustrates a side view of the wedge assembly according to some embodiments of the invention;
Figure 11A illustrates an exploded view of a track system that utilizes a support extrusion and wedge assembly couple tracks to a base extrusion according to some embodiments of the invention;
Figure 11B illustrates a side view of an assembled track system that utilizes a support extrusion and wedge assembly to couple tracks to a base extrusion according to some embodiments of the invention;
Figure 11C illustrates an isometric view of a track system with brakes and wheel covers according to some embodiments of the invention;
Figure 11D illustrates an isometric view of a track system with brakes and wheel covers according to some embodiments of the invention;
Figure 11E illustrates the method steps involved in assembling an assembly a track with a base extrusion via a support extrusion and a wedge assembly according to some embodiments of the invention;
Figure 12A illustrates a double-edged support extrusion for coupling a track with a base extrusion via a wedge assembly according to some embodiments of the invention; and
Figure 12B illustrates an isometric view of a double-edged support extrusion for coupling a track with a guide wheel via a wedge assembly and with brakes and lubricators according to some embodiments of the invention.

### DETAILED DESCRIPTION OF THE INVENTION

Those of ordinary skill in the art will realize that the following detailed description of the present invention is illustrative only and is not intended to limit the claimed invention. Other embodiments of the present invention will readily suggest themselves to such skilled persons having the benefit of this disclosure. It will be appreciated that in the development of any such actual implementation, numerous implementation-specific decisions must be made in order to achieve the developer's specific goals. Reference will now be made in detail to implementations of the present invention as illustrated in the accompanying drawings. The same reference indicators will be used throughout the drawings and the following detailed description to refer to the same or like parts.

Linear motion guides are used extensively in manufacturing processes and other applications. The support bases for linear motion guides are typically standard-sized extrusions. For example, Figure 1 illustrates an isometric schematic representation of a widely available aluminum extrusion support base 130 manufactured by the Parker Hannifin Corporation, located in Cleveland, Ohio. Likewise, tracks and guide wheels for the linear motion guides are typically a standard manufacture and are commercially available. For example, the DualVee® guide wheel and Single Edge Track, both manufactured by Bishop-Wisecarver Corporation, are time-tested and ideal for a wide variety of applications. As discussed above, there is a need for an easy and reliable assembly for coupling a track to a support base.

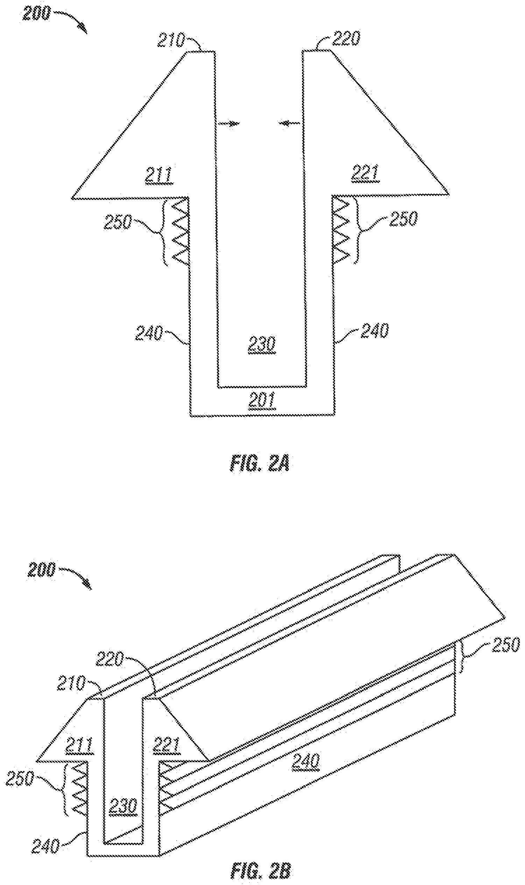

Figure 2A illustrates a schematic end view of the fastener-less track assembly 200 for coupling a linear motion track to a support base according to a comparative example useful for understanding the invention. As shown, the assembly 200 comprises two clamp arms 210, 220 which are connected to a base section 201 to form a well 230. As shown, the two arms 210, 220 extend vertically away from the base section 201 and terminate at a fixed distance from the base section 201, thus defining the well 230.

The well 230 is configured to accommodate a linear motion guide track (not shown). Two shoulders 211, 221 are disposed at the end, and on the outer sides of the arms 210, 220. As described, the assembly 200 is configured to be inserted into a support base (not shown) such that the well is disposed within the support base. Likewise, the support base interacts with the shoulders 211, 221 such that the assembly rests upon the surface of the support base. Additionally, two sets of teeth protrusions 250 are disposed on the outer surfaces 240 of the arms 210, 220. In the present comparative example useful for understanding the invention, the teeth protrusions 250 are configured such that they must be deformed to be inserted into a support base, thus provided a fastener-less coupling.

The teeth protrusions 250 are deformed and/or sheared by the press-fitting into an extrusion (not shown). Preferably, the deformation of the teeth protrusions 250 causes the arms 210, 220 to be displaced toward each other (as indicated by the arrows). The displacement clamps a track (not shown) between the arms 210, 220, thereby securing the track therein.

In some examples , the deformation of the teeth protrusions 250 effectuates galling between the track assembly 200 and an extrusion (not shown). In some examples, the deformation of the teeth protrusions 250 effectuates a cold-pressure solid-state welding process.

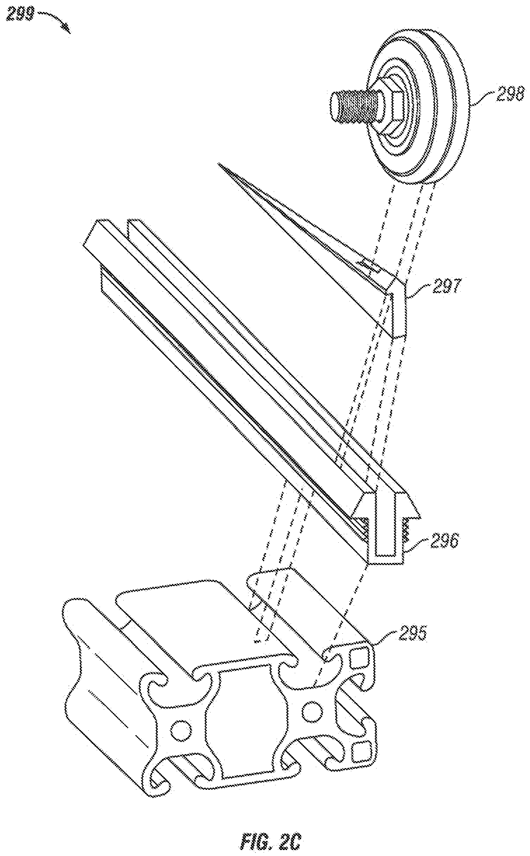

Figure 2B illustrates an isometric schematic view of the assembly 200 according to a comparative example useful for understanding the invention. Figure 2C illustrates an exploded isometric view of a linear motion apparatus 299 comprising a guide wheel 298, a track 297, a track assembly 296, and a support base extrusion 295.

In some examples, the guide wheel 298 is a DualVee® guide wheel manufactured by Bishop-Wisecarver Corporation, located in Pittsburg, California. According to these embodiments, the guide wheel 298 is chosen from among "Original V Bearing Guide Wheels", "Studded V Bearing Guide Wheels", and "Integral V Bearing Guide Wheels".

The "Original V Bearing Guide Wheels" consist of both an external and internal 90 degree "Vee" angle. The guide wheel is made with a double row angular contact bearing for excellent load capability and long life. V bearing guide wheels are preferably available in 52100 steel or 440C stainless steel from stock. Other options include seals and shields to meet specific application needs. Special DualVee® guide wheels are available for clean room, vacuum, and elevated temperature applications. Customer specific lubricants can also be used with the guide wheels.

The Studded guide wheels combine the versatility and robustness of the DualVee® v bearing guide wheel with convenience of a thru-hole mounting stud into a single piece. Concentric or eccentric stainless steel studs are riveted onto the wheels for a strong connection.

Integral V Bearing Guide Wheels offer a one piece construction. Sizes 2-4 steel wheels feature a one piece bushing or stud shaft with a machined inner bearing race. Sizes 0-1 steel and all polymer wheels utilize a riveted retaining technology to secure the wheel to the stud. Integral wheels add overmolded high performance polymer DualVee® wheels and MadeWell crown rollers to the DualVee®family to provide further component versatility.

In some examples, the track 297 is a track manufactured by Bishop-Wisecarver Corporation, located in Pittsburg, California. These tracks are especially designed for DualVee® guide wheels. In some embodiments, the track 297 is a single edge track, such as the "Vee" edge track, manufactured by Bishop-Wisecarver Corporation, located in Pittsburg, California. For example, a single edge track in 1045 carbon steel and 420 stainless steel from stock is available and would benefit from the present disclosure. At the "Vee" edge, a mounting shoulder is provided for quick reference during assembly. The single edge track is able to be disposed with or without hardened "Vee" surfaces. Hardened track comes in lengths of 20 feet, and can be easily butt-jointed for longer length applications. Non-hardened track comes in lengths up to 22 feet, and also may be butt-jointed for longer lengths. Additionally, all single edge track is able to be manufactured with or without drilled holes for mounting. "QuickTrak" series clamp extrusion is also available for fast and easy installation of size 3 DualVee®track.

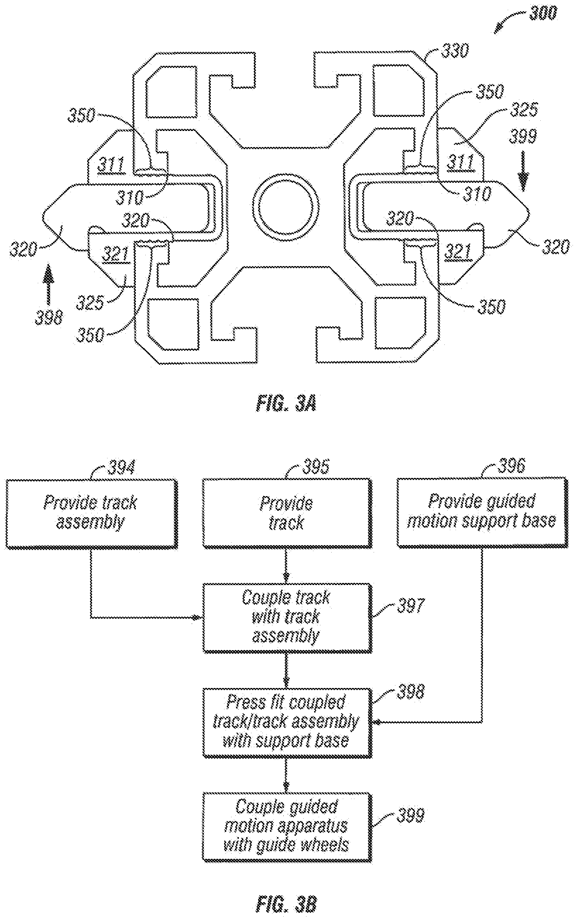

Figure 3A illustrates an end view of a linear motion track 300 comprising a support base 330 with a track assembly 325 and track 320. As shown, the track assembly 325 is pressure fitted into the support base 330. In some examples, the track assembly 325 is configured such that it is easily coupled with the support base 330 using only basic tools. In an example, the track assembly 325 is configured such that a simple rubber mallet can easily force the track assembly into the support base 330. However, it will be readily apparent to those having ordinary skill in the art that a wide variety of coupling mechanisms can be used.

The simple and secure coupling ability of the invention provides distinct and extremely useful advantages of the approaches known in the art. For example, since linear motion tracks can be easily assembled without expensive and complicated tools, the cost savings of using the track assembly 325 is great. Additionally, the time to install a linear motion track is greatly reduced through the elimination of complicated assembly. By using a track assembly 325 that is compatible with standard extrusions, businesses do not need to invest in all new support bases and may provide consistency in their plant by using the same parts with the new assemblies. Furthermore, the track assemblies 325 provide a more secure coupling than other fastener-less approaches.

First, as explained above, teeth protrusions 350 are disposed on the arms 310, 320 of the track assemblies 320. As a result of the pressure fitted coupling, the teeth protrusions 350 are deformed, thus ensuring a secure fit between the track assembly 325 and the support base 330. Additionally, the shoulders 311, 321 provide additional support to the track 320. For example, torque applied to the track 320 (indicated with arrows 398, 399) is resisted by the shoulders 311, 321.

It will be readily apparent to those having ordinary skill in the art that the components disclosed in Figure 3A, and in other embodiments of the invention may take various sizes, shapes and appearance. In some embodiments, the arms 310, 320 of the track assembly 325 are spaced between 3 mm and 12 mm apart. In some embodiments, the track 320, the base 330 and the track assembly 325 are between 3m and 6 m long.

In some embodiments, the track assembly 325, as recited, is substantially comprised of steel. In some embodiments, the track assembly 325 as recited is substantially comprised of stainless steel. In some embodiments the track assembly 325 is formed by extrusion. In some embodiments the track assembly 325 is formed by metal injection molding.

In some examples, the deformation of the teeth protrusions 350 effectuates galling between the track assembly 320 and an extrusion 330. In some examples, the deformation of the teeth protrusions 350 effectuates a cold-pressure solid-state welding process.

Figure 3B illustrates methods steps of manufacturing a guided motion system utilizing the novel track assembly of a comparative example useful for understanding the invention. The method starts by providing a guided motion support base 396, providing a track 395, and providing a track assembly 394. Preferably, the track and track assembly are substantially axial. Likewise, the guided motion support base preferably has at least one conduit disposed therein for accepting the track assembly. In some examples, the track assembly has cross section that is substantially U-shaped and has a plurality of teeth protrusions disposed on the outside surface of the assembly.

The method of manufacturing shown in Figure 3B continues with coupling the track with the track assembly 397. Next, the coupled track/track assembly is press-fitted into the conduit of the support base 398. As explained above, a rubber mallet may easily tap the track/track assembly into the support base. According to some embodiments, the teeth protrusions on the track assembly are deformed when the track assembly is press-fitted in the support base, thus providing a secure coupling. Finally, the assembled guided motion assembly is slidably coupled with one or more guide wheels 399.

In some examples, the method further comprises manufacturing the track, the support base, and/or the track assembly. In some embodiments, the components are formed via an extrusion. In other embodiments, the components are formed by metal injection molding.

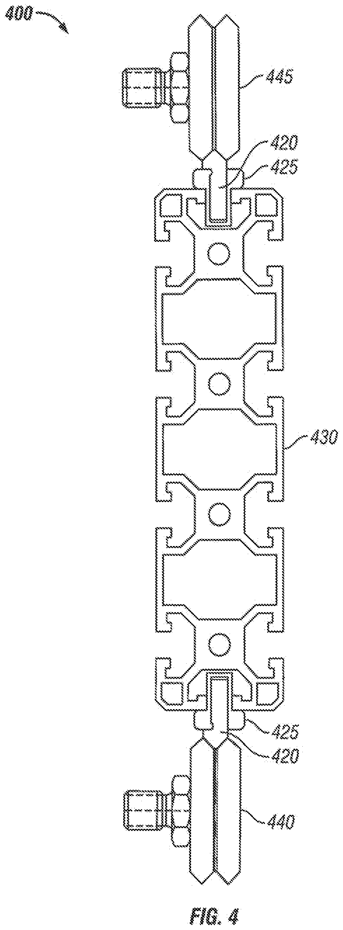

Figure 3A illustrates a support base 330 with two track assemblies 325 and two tracks 320. However, it will be readily apparent to those having ordinary skill in the art, having the benefit of this disclosure that a number of assembly configurations will benefit from the invention. Figures 4-6 illustrate schematic views of alternate examples of linear motion tracks utilizing novel track assemblies according to comparative examples useful for understanding the invention.

Figure 4 illustrates an end schematic view of a linear motion apparatus 400 comprising a support base 430 disposed vertically between two guide wheels 440, 445. The support base 430 is coupled to tracks 420 via assembly 425. A plurality of teeth protrusions (not shown) are disposed on the assembly 425. As shown, the apparatus 400 is configured to move in and out of the page.

In some examples, the deformation of the teeth protrusions (not shown) effectuates galling between the track assembly 425 and an extrusion 430. In some examples, the deformation of the teeth protrusions (not shown) effectuates a cold-pressure solid-state welding process.

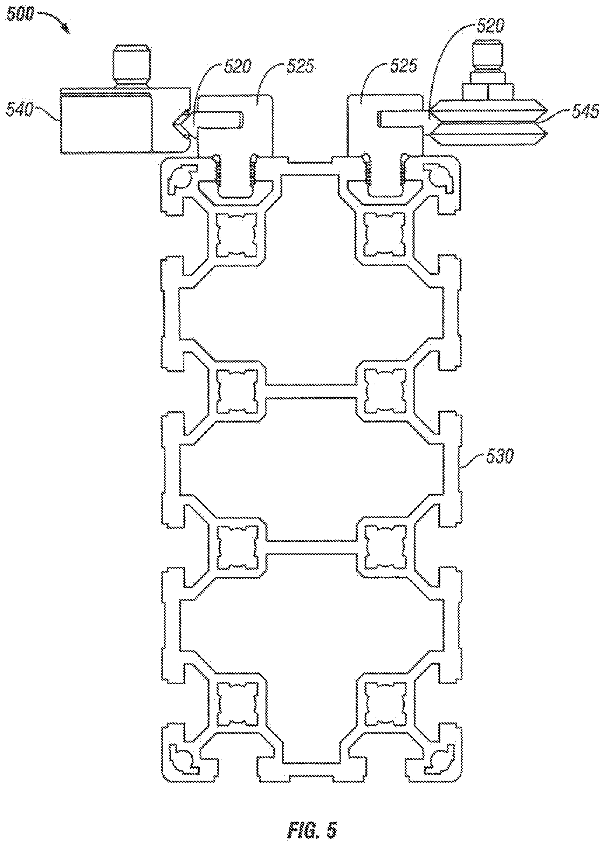

Figure 5 illustrates an end schematic view of a linear motion apparatus 500 comprising a support base 530 disposed vertically between two guide wheels 540, 545. The support base 530 is coupled to tracks 520 via assembly 525. A plurality of teeth protrusions (not labeled) are disposed on the assembly 525. As shown, the apparatus 500 is configured to move in and out of the page.

In some examples, the deformation of the teeth protrusions (not shown) effectuates galling between the track assembly 525 and an extrusion 530. In some examples, the deformation of the teeth protrusions (not labeled) effectuates a cold-pressure solid-state welding process.

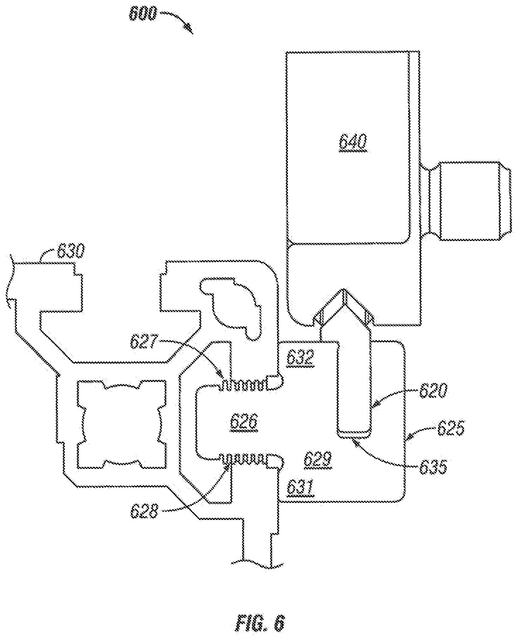

Figure 6 illustrates an end schematic view of a linear motion apparatus 600 comprising a support base 630 disposed vertically between two guide wheels 640, 645. The support base 630 is coupled to tracks 620 via track assembly 625. A plurality of teeth protrusions 627, 628 are disposed on the assembly 625. As shown, the apparatus 600 is configured to move in and out of the page.

In some examples, the deformation of the teeth protrusions 627, 628 effectuates galling between the track assembly 625 and an extrusion 630. In some examples, the deformation of the teeth protrusions 627, 628 effectuates a cold-pressure solid-state welding process.

The track assembly 625 is substantially axial, in and out of page, and includes a substantially axial plug section 626 with a plurality of teeth protrusions 627, 628 disposed on the outer side of the plug section 626. Additionally, the plug section 626 includes a substantially axial cap section 629 coupled to the plug section 626 wherein the cap section 629 is at least partially wider than the plug section, forming shoulders 631, 632 which rest upon the surface of the support base 630 when the track assembly 625 is coupled with the base section 630. Furthermore, a well 635 is disposed in the cap section 629 configured to hold the track 620 therein. According to some examples, and as shown in Figure 6, the orientation of the well 635 within the cap section 629 is substantially orthogonal to the orientation of the plug section 626. In some examples, the cap section 629 and the plug section 626 are integral.

As explained above, there is an existing need in the art for an apparatus and system for providing customers with a simple-to-assemble, customizable, reconfigurable, and user-friendly solution for reliable track assembly. To meet this need, some other embodiments of the invention involve simple fastening of a track to a support base using standard commercially-available hardware and a novel bolt-on clamp extrusion. The bolt-on clamp extrusion also allows effortless parallel alignment of the track using a raised-up guide ridge that accommodates variously-sized support base extrusions. Other advantages of these embodiments of the invention will be readily apparent to those with ordinary skill in the art having benefit of this disclosure.

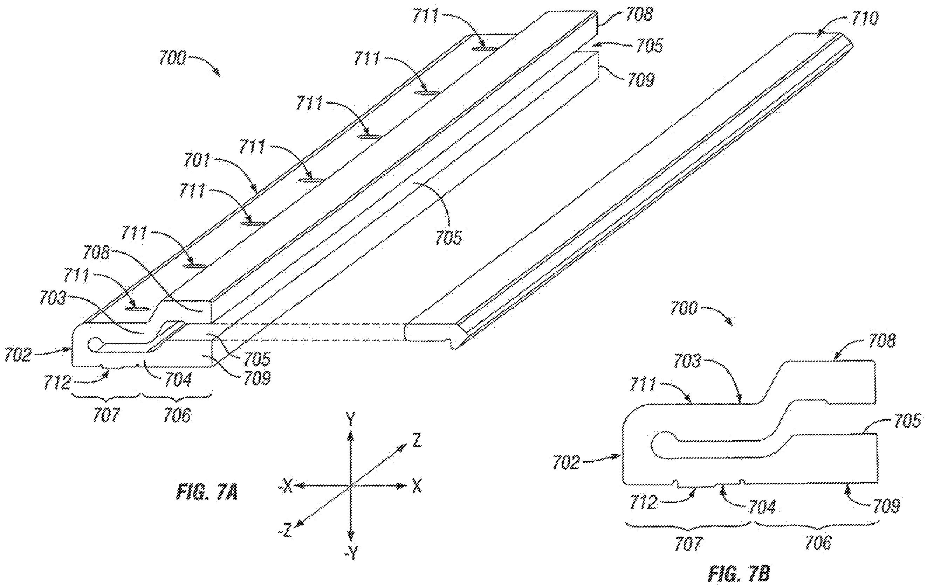

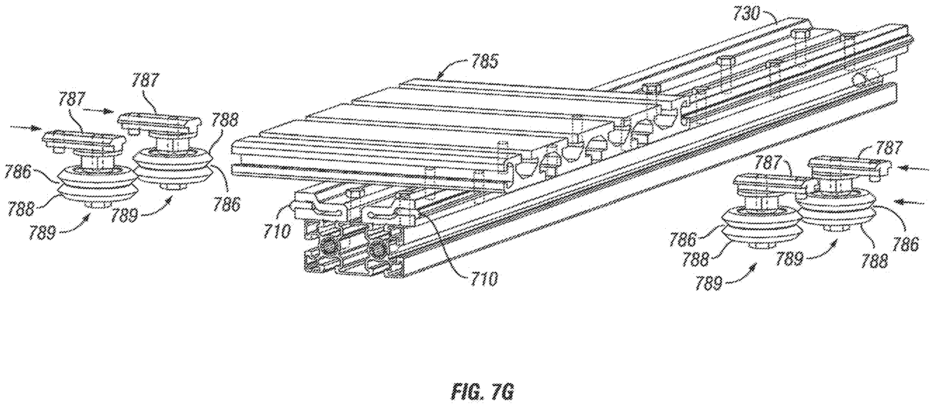

Figure 7A is a schematic isometric representation of the bolt-on clamp extrusion 700 and a track 710 according to a comparative example useful for understanding the invention. The bolt-on clamp extrusion 700 comprises an elongated, integral axial member 701 having a connected end 702 and two arms 703, 704 disposed in parallel planes. The two arms 703, 704 terminate with two clamping fingers 708, 709 in a finger-clamping region 706 at the end opposite the connected end 702.

Figure 7B is an end view of the bolt-on clamp extrusion 700 according to a comparative example useful for understanding the invention.

Referring again to Figure 7A, the two horizontally disposed arms 703, 704 define a gap 705 running axially throughout the length of the bolt-on clamp extrusion 700. The gap 705 is configured to accept the insertion of a track 710. In examples, the track 710 comprises a DualVee® track manufactured by Bishop-Wisecarver Corporation, located in Pittsburg, California. The gap 705 extends in the -x-direction past the finger-clamping region 706 into a bolt-down region 707.

The bolt-down region 707 of the arms 703, 704 includes a plurality of pre-drilled conduits 711, each of which line up in the y-direction as they pass through each of the arms 703, 704. The pre-drilled conduits 711 are configured for accommodating a bolt (not shown) such that at least a portion of the bolt extends completely through each conduit 711 for coupling with a nut (not shown). The bolt-down region 707 also includes a raised-area ridge 712 extending axially on the underside length of the bolt-on clamp extrusion 700. The raised-area ridge 712 is configured to self-align with a slot of a support base extrusion (not shown) such that a track (not shown) inserted in to the bolt-on clamp extrusion 700 remains parallel to the support base extrusion.

Maintaining parallelism between the track and the support base extrusion is extremely important. However, as explained above, previous solutions require careful measuring, alignment, and drilling. Accordingly, self-alignment between the raised-area ridge 712 and a slot of the support base extrusion provides a simple way to align the two work pieces parallel when assembling a track system. This user-friendliness itself provides a novel advantage of the approaches known in the art.

In examples, the raised-area ridge 712 is less wide than the total width of the slot of the support base extrusion, such that the raised-area ridge 712 can align with either side of the slot.

Moreover, the advantages gained by providing simple parallel alignment are compounded synergistically with the advantages of simplicity of assembly gained by providing coupling and clamping mechanisms using fasteners.

For example, a user of the bolt-on clamp extrusions 700 does not need a sophisticated machining shop to assemble a linear guide system. As explained above, known solutions oftentimes require that the end user cut, drill, or otherwise machine work pieces to configure a linear guide system. However, bolt-on clamp extrusions require only commercially available parts and are easily assembled and reconfigured without requiring any skill.

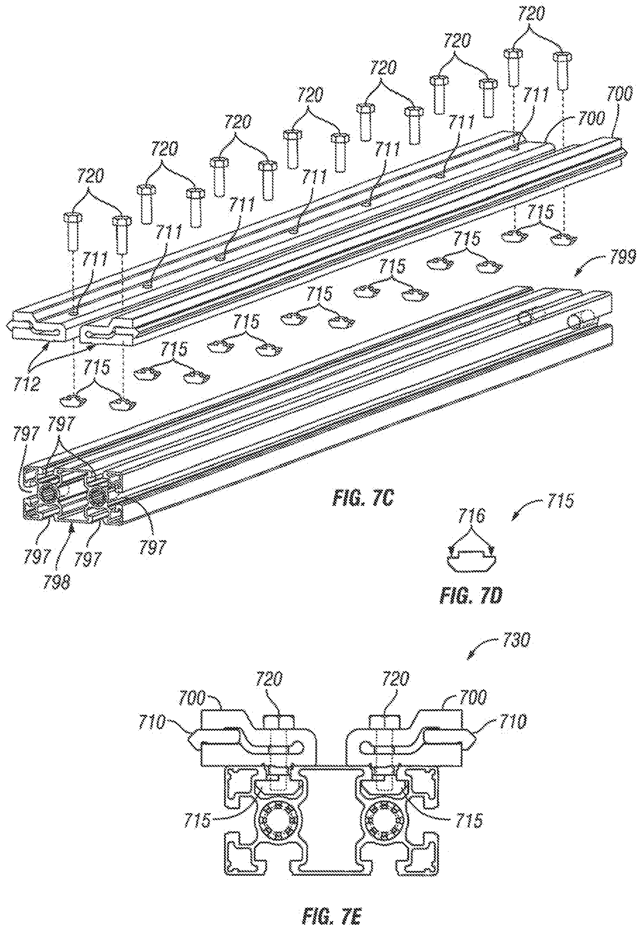

Figure 7C is an exploded view of a support base extrusion 799 and two bolt-on clamp extrusions 700 according to a comparative example useful for understanding the invention. The support base extrusion 799 comprises an integral member 798 extending axially in the z-direction. The support base extrusion 799 comprises a plurality of t-slots 797 disposed along the length of the support base extrusion 799.

The pre-drilled conduits 711 of the bolt-on clamp extrusions 700 align with t-slots 797 of the support base extrusion 799 and a plurality of nuts 715 and bolts 720 couple the bolt-on clamp extrusions 700 with the support base extrusion 799. The plurality of nuts 715 are inserted into the t-slots 797 of the support base extrusion 799.

Figure 7D is a schematic representation of a nut 715 according to a comparative example useful for understanding the invention. The nuts 715 include arms 716 which contact the inner-surface of the t-slot 797 upon an upward application of force on the nut 715 and therefore resist said force. In examples, the nuts 715 and bolts 720 are commercially available.

The plurality of blots 720 are inserted through the pre-drilled conduits 711 and extend into the t-slots 797 where they couple with the plurality of nuts 715. In examples, the nuts 715 and bolts 720 are threaded such that providing torque to the bolts 720 about the y-axis couples the bolts 720 with the nuts 715. The process of coupling the bolts 720 with the nuts 715 results in an upward force on the nuts 715. This force is resisted by the t-slots 797, thereby securing the bolt-on clamp extrusions 700 with the support base extrusion 799.

The process of coupling the nuts 715 and bolts 720 also deforms the arm 703 and the finger 708, thereby clamping the finger-clamping region 706 onto the track 710 inserted therein. Figure 7E is an end-view of an assembled track system 730 with bolt-on clamp extrusions 700 coupled with support base extrusions 799 with nuts 715 and bolts 720, thereby clamping the bolt-on clamp extrusions 700 onto tracks 710.

The assembled track system 730 is preferably used with one or more DualVee® guide wheels manufactured by Bishop-Wisecarver Corporation, located in Pittsburg, California. Figure 7E illustrates a representation of a guide wheel assembly 789 that is configured to be used with a track system 730 according to a comparative example useful for understanding the invention. The guide wheel assembly 789 comprises a DualVee® guide wheel 788 coupled with a T-bar 787. The T-bar 787 is configured to slidably couple with a T-slot of standard slidable beam extrusions. The DualVee® guide wheel 788 includes a v-shaped valley 786 for accommodating a track 710 of the track system 730.

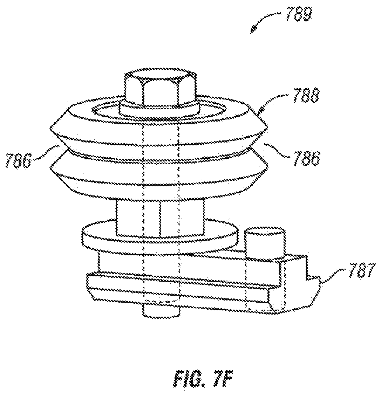

Figure 7F is an exploded view of an assembled track system 730 capable of being coupled with a slidable beam extrusion 785 via a plurality of guide wheel assemblies 789. The track bars 787 of the guide wheel assemblies 789 slide into a T-slot (not labeled) of the slidable beam extrusion 785 until the track 710 is housed in the v-shaped valley 786 of the DualVee® guide wheel 788. In examples, a felt wiper may be coupled to slidable beam extrusion 785. In yet other embodiments, a brake mechanism can be included in the system.

The bolt-on clamp extrusion track assemblies 730 provide users with a simple-to-assemble, customizable, reconfigurable, and user-friendly solution for reliable track assembly. Moreover, the tracks are readily replaceable to accommodate tracks made of other material and to service a track that may need to be straightened or otherwise serviced. Other advantages will be apparent to those with ordinary skill in the art having the benefit of this disclosure.

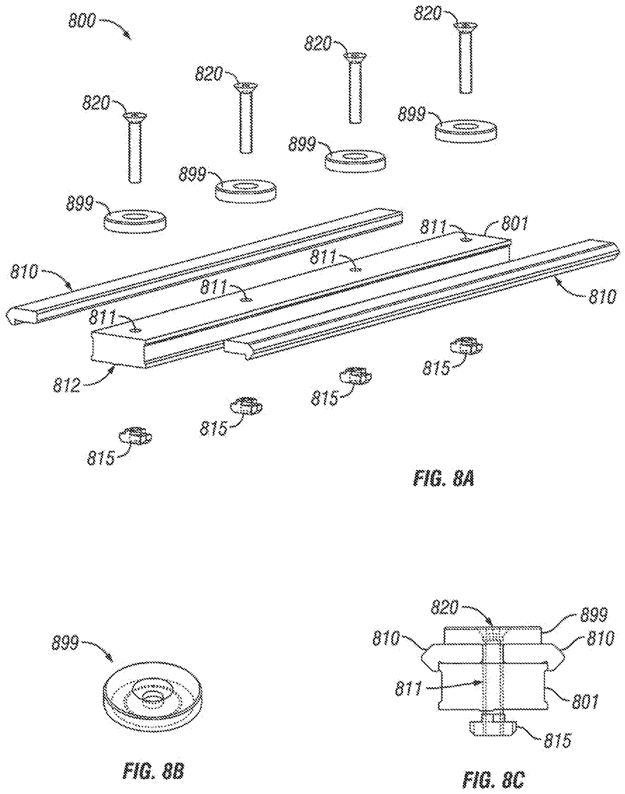

Figure 8A through 8D illustrate some other comparative examples useful for understanding the invention, which include a back-to-back track assembly 800. As explained above, there is a need for simply-assembled, user-friendly, reconfigurable, low-profile track assemblies. The back-to-back track assembly 800 fulfills these needs as explained herein.

Figure 8A is an exploded view of a back-to-back track assembly 800 according to a comparative example useful for understanding the invention. The back-to-back track assembly 800 includes a base extrusion 801 that includes a raised-area ridge 812 configured to self-align with a slot of a support base extrusion (not shown), as explained above. The base extrusion 801 also includes a plurality of pre-drilled conduits 811, each of which line up in the y-direction as they pass through the base extrusion 801. The pre-drilled conduits 811 are configured for accommodating a plurality of bolts 820 such that at least a portion of the bolts 820 extend completely through the base extrusion 801 for coupling with one of a plurality of nuts 815.

The back-to-back track assembly 800 also includes two tracks 810 that lay on the base extrusion 801 and are coupled to the base extrusion 801 via a plurality of retaining washers 899. Figure 8C illustrates an end view of a coupled back-to-back track assembly 800. As shown in Figure 8C, the retaining washers 899 couple the tracks 810 to the base extrusion 801 by sandwiching the tracks 810 between the retaining washer 899 and the base extrusion 801 and securing the coupling by screwing the bolt 820 into the nut 815. In examples, the retaining washers 899 are countersunk, as shown in Figure 8B.

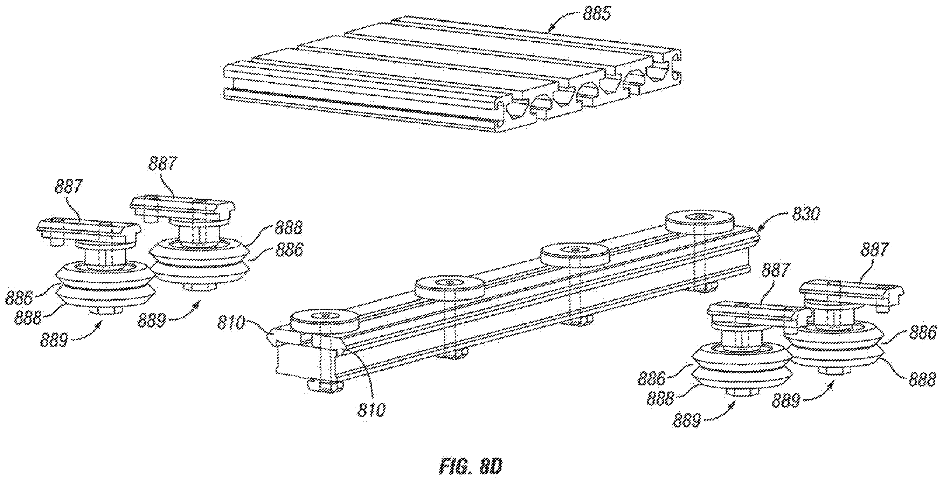

Figure 8D is an exploded view of an assembled track system 830 capable of being coupled with a slidable beam extrusion 885 via a plurality of guide wheel assemblies 889. The track bars 887 of the guide wheel assemblies 889 slide into a T-slot (not labeled) of the slidable beam extrusion 885 until the track 810 is housed in the v-shaped valley 886 of the DualVee® guide wheel 888. In examples, a felt lubrication wiper may be coupled to slidable beam extrusion 885. In yet other embodiments, a brake mechanism can be included in the system.

The back-to-back track assemblies also provide users with a simple-to-assemble, customizable, reconfigurable, and user-friendly solution for reliable track assembly. Moreover, the tracks are readily replaceable to accommodate tracks made of other material and to service a track that may need to be straightened or otherwise serviced. Other advantages will be apparent to those with ordinary skill in the art having the benefit of this disclosure.

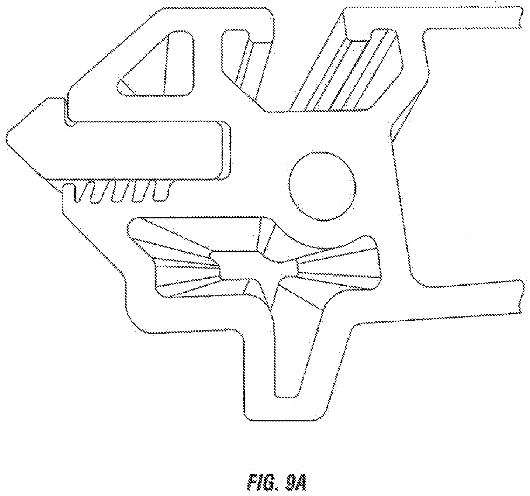

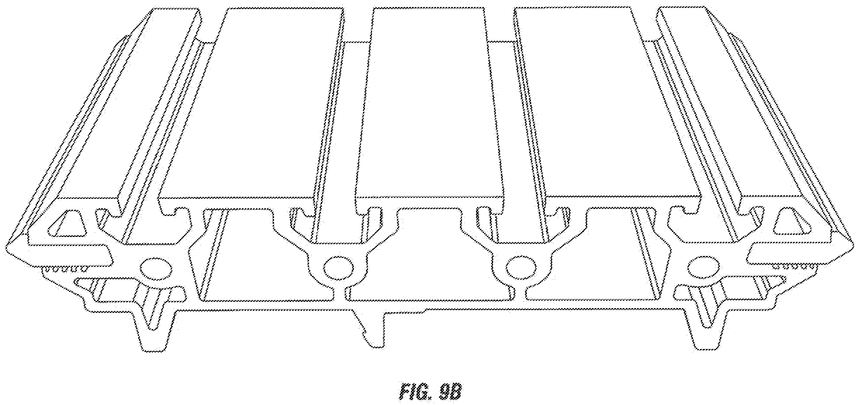

Some other examples include a custom-made, snap-in support base extrusion for holding a track without the use of an assembly or without using fasteners. Figures 9A and 9B illustrate some other comparative examples useful for understanding the invention, which include a snap-in support base extrusion 999.

As explained above, some other prior art solutions include simply placing a track directly into a T-slot of a base support extrusion. These known solutions results in an unacceptably imprecise fit. For example, commercially available base support extrusions will vary in T-slot width for any given mill run. Therefore, a track having a uniform width will either fit to tightly or too loosely within the slot. A solution to this problem is addressed by creating a plurality of deformable fingers in a track slot that elastically and/or plastically deform when a track is inserted into the slot, thereby resisting the removal of the track and ensuring a tight fit despite variations in track or slot size.

Figure 9A is an example of a support base extrusion with a plurality of deformable fingers disposed in the slot with a track inserted therein according to a comparative example useful for understanding the invention. Figure 9B is an alternate example of a support base extrusion with a plurality of deformable fingers disposed in the slot with a track inserted therein according to a comparative example useful for understanding the invention.

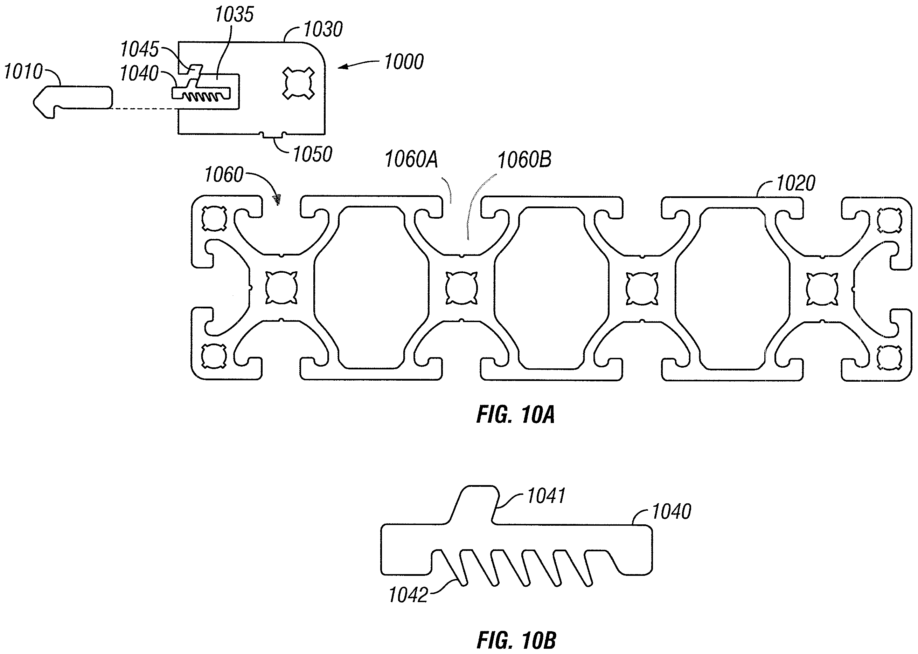

Another solution to imprecisely-fitting tracks involves the introduction of a wedge assembly into a slot on a support extrusion along with the track. Figure 10A illustrates a side view of an assembly 1000 for coupling a track 1010 with a base extrusion 1020 via a support extrusion 1030 and a wedge assembly 1040 according to some embodiments of the invention. Each of the track 1010, the base extrusion 1020, the support extrusion 1030, and the wedge assembly 1040 extend axially in and out of the page.

Figure 10B illustrates a side view of the wedge 1040 according to some embodiments of the invention. According to Figure 10B, the wedge 1040 comprises a protrusion 1041 on a first side of the wedge 1040 and a plurality of deformable teeth 1042 on an opposite side of the wedge 1040.

In the presently preferred embodiments of the invention, the protrusion 1041 and the plurality of deformable teeth 1042 extend axially the length of the wedge assembly 1040, i.e. in and out of the page. However, in some other embodiments, the protrusion 1041 and the plurality of deformable teeth 1042 are placed regularly, intermittently, randomly, or bookended.

Referring again to Figure 10A, the support extrusion 1030 includes a well 1035 and a slit 1045 running the axial length of the support extrusion 1030. The slit 1045 is configured for securely accepting the protrusion 1041 of the wedge 1040 when the wedge 1040 is inserted into the weii 1035. Likewise, the track 1010 is configured to be press-fitted into the well 1035 by deforming or shearing the teeth 1042 of the wedge 1040, thereby securely holding the track 1010 within the support extrusion 1030. Indeed, a tight coherent fit is formed between the track 1010 and the support extrusion 1030, thereby minimizing movement of the track during use.

In some applications, a separate wedge is superior to a work piece having integral teeth because the process of extruding teeth protrusions can be delicate and lead to unacceptable waste.

In some embodiments of the invention, the support extrusion 1030 comprises a ridge area 1050 extending axially on the underside length of the support extrusion 1030. The ridge 1050 is configured to self-align with a slot 1060 of the base extrusion 1020 such that the assembly 1000 remains aligned when the assembly 1000 is coupled with the base extrusion 1020 (explained below).

Maintaining alignment between the track 1010 and the support extrusion 1020 is extremely important. However, as explained above, previous solutions require careful measuring, alignment, and drilling. Accordingly, self-alignment between the ridge 1050 and the slot 1060 of the support extrusion 1020 provides a simple way to align the two work pieces parallel when assembling a track system. This user-friendliness itself provides a novel advantage of the approaches known in the art. In some embodiments of the invention, the ridge 1050 is less wide than the total width of the slot 1060 of the support extrusion 1030, such that the ridge 1050 can align with either side of the slot.

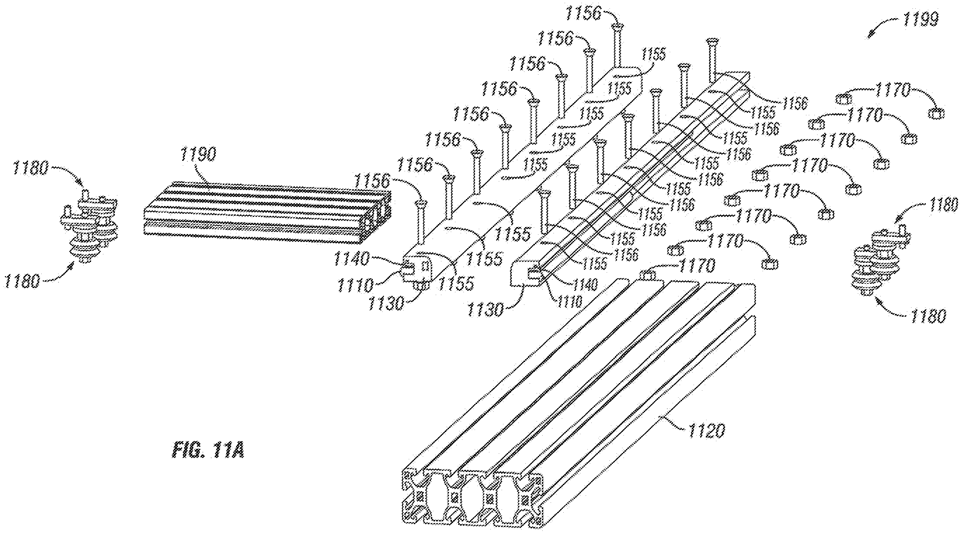

Figure 11A illustrates an exploded view of a track system 1199 that utilizes a support extrusion 1130 and wedge 1140 to couple tracks 1110 to a base extrusion 1120 according to some embodiments of the invention.

According to Figure 11A, two assemblies 1100 are assembled by press-fitting tracks 1110 into support extrusions 1130 via wedges 1140. According to Figure 11A, the support extrusion 1130 includes a series of conduits 1155 for accepting the insertion of a bolt 1156 therethrough. Likewise, the slots (not shown) in the base extrusion 1120 is configured such that one or more T-nuts 1170 fit therein.

The assembled assemblies 1100 are axially aligned with a base extrusion 1120 and a plurality of T-nuts 1170 are inserted into one or more slots 1060. Additionally, a plurality of guide wheels 1180 are aligned with the tracks 1110. Likewise, the plurality of guide wheels 1180 are configured to be coupled with a moveable extrusion 1190.

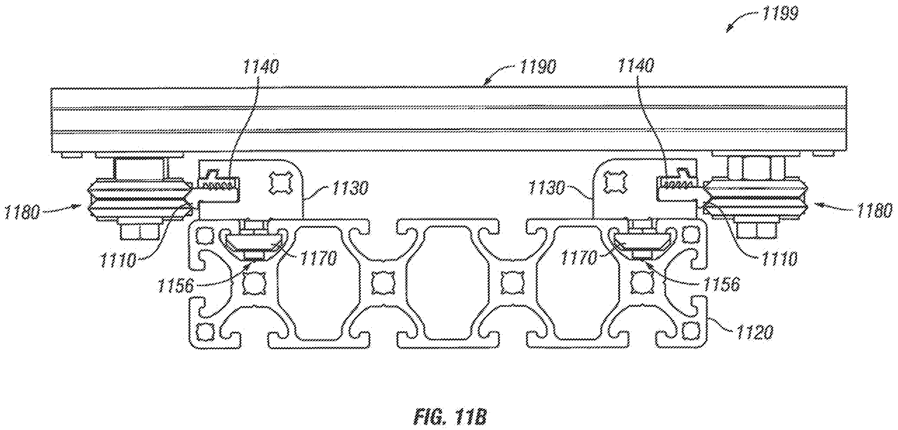

Figure 11B illustrates a side view of an assembled track system 1199 that utilizes a support extrusion 1130 and wedge 1140 to couple tracks 1110 to a base extrusion 1120 according to some embodiments of the invention. According to Figure 11B, the bolts 1156 are inserted through the conduits and coupled with the T-nuts 1170, thereby securing the support extrusion 1130 with the base extrusion 1120. Likewise, the guide wheels 1180 are aligned with the tracks 1110 and to the moveable extrusion 1190.

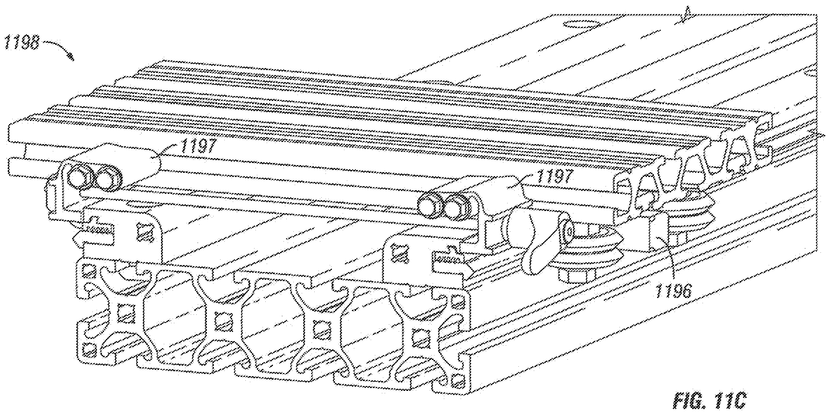

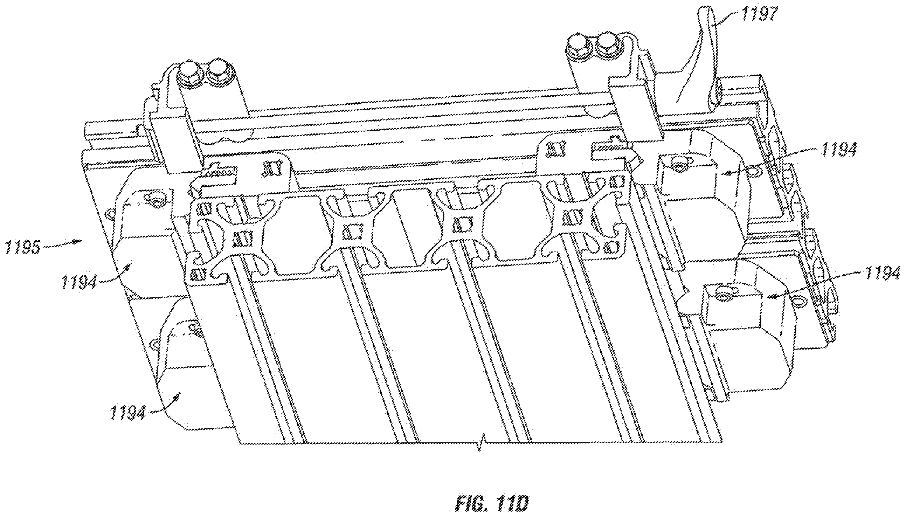

In some embodiments the track system described in Figures 11A and 11B include one or more of brakes, lubricators, and wheel covers. Figure 11C illustrates an isometric view of a track system 1198 with brakes 1197 and lubricators 1196 according to some embodiments of the invention. Figure 11D illustrates an isometric view of a track system 1195 with brakes 1197 and wheel covers 1194. According to some embodiments, the wheel covers 1194 include their own lubrication system with two lubricated felts per wheel cover.

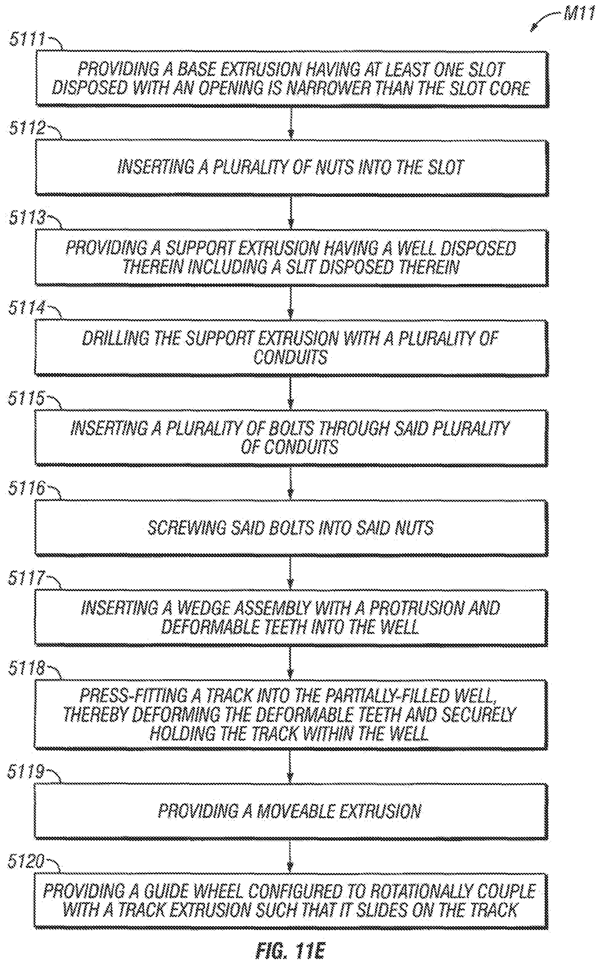

Figure 11E illustrates the method steps involved in assembling an assembly a track with a base extrusion via a support extrusion and a wedge according to some embodiments of the invention.

The method M11 of Figure 11E begins with providing a base extrusion having at least one slot disposed with an opening 1060A is narrower than the slot core 1060B at step S111. The method continues with inserting a plurality of nuts into the slot at step S112 and providing a support extrusion having a well disposed therein including a slit disposed therein at step S113.

The method continues with drilling the support extrusion with a plurality of conduits at step S114, inserting a plurality of bolts through said plurality of conduits at step S115, screwing said bolts into said nuts at step S116.

The method continues with inserting a wedge with a protrusion and deformable teeth into the well at step S117, press-fitting a track into the partially-filled well, thereby deforming the deformable teeth and securely holding the track within the well at step S118.

Next, the method involves providing a moveable extrusion at step S119 and providing at least one guide wheel configured to rotationally couple with the track extrusion such that the moveable extrusion slides with the track at step S120.

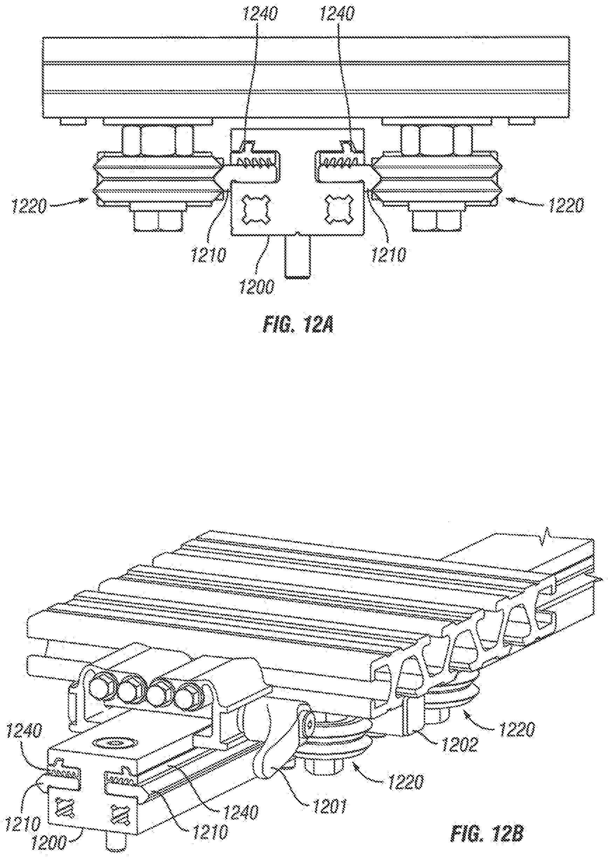

Some embodiments of the invention involve a double-edged support extrusion for coupling a track with a base extrusion via a wedge according to some embodiments of the invention. For example, Figure 12A illustrates a side view of a double-edged support extrusion 1200 for coupling a track 1210 with a guide wheel 1220 via a wedge 1240 according to some embodiments of the invention.

Figure 12B illustrates an isometric view of a double-edged support extrusion 1200 for coupling a track 1210 with a guide wheel 1220 via a wedge 1240 and with brakes 1201 and lubricators 1202 according to some embodiments of the invention.

In the presently preferred embodiments of the invention, the track system comprises a coefficient of friction ranging from 0.005 to 0.02. Likewise, the track systems can be fully customized to the end-users environment using carbon or stainless steel track, and carbon, or stainless steel wheels, or low temp, high temp, WashDown, or custom grease wheel versions.

The invention has been described in terms of specific embodiments incorporating details to facilitate the understanding of the principles of construction and operation of the invention. Such reference herein to specific embodiments and details thereof is not intended to limit the scope of the claims appended hereto. It will be apparent to those skilled in the art that modifications can be made in the embodiment chosen for illustration without departing from the scope of the invention, which is defined by the appended claims only.

## Claims

1. A system for securing a linear motion guide track (1010), the system comprising:
a linear motion guide track (1010) comprising a rigid, axial member having a track interface surface running the axial length of said linear motion guide track (1010);
a support extrusion (1030) comprising
a axial member having at least one well (1035) disposed therein running the axial length of the support extrusion (1030), and
a plurality of conduits (1155) extending therethrough in a direction perpendicular to said axial length of said support extrusion (1030); and the system being **characterised in that**
said at least one well (1035) includes a slit (1045) disposed therein running the axial length of the support extrusion (1030);
wherein said support extrusion (1030) further comprises
a wedge (1040) comprising a rigid, axial member, a first side and a second side opposite the first side, wherein the wedge (1040) further comprises
a protrusion (1041) on the first side of said wedge (1040) and running the axial length of said wedge (1040), and
a plurality of deformable teeth (1042) on the second side of said wedge (1040), said plurality of deformable teeth (1042) extending substantially perpendicularly from the
axial length of said wedge (1040);
wherein said support extrusion (1030) is configured such that said slit (1045) of said at least one well (1035) accepts said protrusion (1041) of said wedge (1040) and said wedge (1040) partially fills said at least one well (1035);
wherein said support extrusion (1030) is configured such that said linear motion guide track (1010) is press-fitted into said partially-filed at least one well (1035), thereby deforming said plurality of deformable teeth (1042) such that said linear motion guide track (1010) is securely held within said at least one well (1035); and
wherein at least a portion of said track interface surface protrudes from said at least one well (1035).

2. The system according to Claim 1, further comprising:
a base extrusion (1020) comprising a planar member having at least one slot (1060) disposed therein, said at least one slot (1060) running a first axial length of said planar member, wherein said slot (1060) comprises an opening (1060A) and a slot core (1060B), wherein said opening (1060A) is more narrow than said slot core (1060B).

3. The system according to Claim 2, further comprising:
a plurality of nuts (1170) inserted into said at least one slot (1060); and
a plurality of bolts (1156) inserted through said plurality of conduits (1155) and extending into said slot core (1060B);
wherein said plurality of nuts (1170) are configured such that said nuts (1170) resist the application of an outward force on said nuts (1170) through their contact with the core-side of said opening (1060A); and
wherein said bolts (1156) screw into said nuts (1170), thereby creating an upward force on said nuts (1170) such that said resistance secures said support extrusion (1030) with said base extrusion (1020).

4. The system according to Claim 3, wherein said support extrusion (1030) further comprises:
a ridge (1050) running the axial length of said support extrusion (1030), said ridge (1050) extending axially along said support extrusion (1030), wherein said ridge (1050) is configured to align with said at least one side of said opening (1060A), thereby ensuring that the axial length of said support extrusion (1030) is parallel to said first axial length of said planar member.

5. The system according to Claim 2, further comprising:
a moveable extrusion (1190); and
at least one guide wheel (1180) configured to rotationally couple with said track interface surface of said linear motion guide track (1010), and further configured for coupling with said moveable extrusion (1190) such that said moveable extrusion (1190) slides with respect to said linear motion guide track (1010).

6. The system according to Claim 5, further comprising:
at least one brake (1197) coupled to say moveable extrusion (1190) configured to apply pressure to said linear motion guide track (1010), thereby at least partially resisting said sliding.

7. The system according to Claim 5, further comprising:
at least one lubricator (1196) coupled to said moveable extrusion (1190), wherein said at least one lubricator (1196) is configured to lubricate said linear motion guide track (1010).

8. The system according to Claim 5, further comprising:
at least one wheel cover (1194) coupled to guide wheel (1180).

9. The system according to Claim 8, wherein said at least one wheel cover (1194) further comprises a lubrication system that is configured to lubricate said linear motion guide track (1010).

10. The system according to Claim 5, further comprising:
at least one additional well disposed on an opposite side of said at least one well running the axial length of the support extrusion (1030), wherein said at least one additional well includes an additional slit disposed therein running the axial length of the support extrusion (1030);
at least one additional linear motion guide track comprising a rigid, axial member having an additional track interface surface running the axial length of said at least one additional linear motion guide track; and
at least one additional wedge comprising a rigid, axial member, further comprising
at least one additional protrusion on a first side of said at least one additional wedge and running the axial length of said at least one additional wedge, and
at least one additional plurality of deformable teeth on a second side of said wedge, said at least one additional plurality of deformable teeth extending substantially perpendicularly from the
axial length of said at least one additional wedge;
wherein said support extrusion (1030) is configured such that said at least one additional slit of said at least one additional well accepts said at least one additional protrusion of said at least one additional wedge, thereby partially filling said at least one additional well;
wherein said support extrusion (1030) is configured such that said at least one additional linear motion guide track is press-fitted into said partially-filed at least one additional well, thereby deforming said at least one additional plurality of deformable teeth such that said at least one additional linear motion guide track is securely held within said at least one additional well; and
wherein at least a portion of said at least one additional track interface surface protrudes from said at least one additional well.

11. A method of securing a linear motion guide track (1010), comprising the steps of:
providing a support extrusion (1030) comprising a axial member having at least one well (1035) disposed therein running the axial length of the support extrusion (1030),
wherein said at least one well (1035) includes a slit (1045) disposed therein running the axial length of the support extrusion (1030);
drilling said support extrusion (1030) with a plurality of conduits (1155) extending therethrough in a direction perpendicular to said axial length of said support extrusion (1030);
inserting a wedge (1040) into said at least one well (1035), thereby partially filling said at least one well (1035), wherein said wedge (1040) comprises
a first side and a second side opposite said first side,
a rigid, axial member,
a protrusion (1041) on a first side of said wedge (1040) and running the axial length of said wedge assembly, and
a plurality of deformable teeth (1042) on a second side of said wedge (1040), said plurality of deformable teeth (1042) extending substantially perpendicularly from the axial length of said wedge (1040), wherein said support extrusion (1030) is configured such that said slit (1045) of said at least one well (1035) accepts said protrusion (1041) of said wedge (1040), thereby partially filling said at least one well (1035); and
press-fitting a linear motion guide track (1010) into said at least one partially-filled well (1035), said linear motion guide track (1010) comprising a rigid, axial member having a track interface surface running the axial length of said linear motion guide track (1010), thereby deforming said plurality of deformable teeth (1042) such that said linear motion guide track (1010) is securely held within said at least one well (1035), and wherein at least a portion of said track interface surface protrudes from said at least one well (1035) upon said press-fitting.

12. The method according to Claim 11, further comprising the step of:
providing a base extrusion (1020) comprising a planar member having at least one slot (1060) disposed therein, said at least one slot (1060) running a first axial length of said planar member, wherein said slot (1060) comprises an opening (1060A) and a slot core (1060B), wherein said opening (1060A) is more narrow than said slot core (1060B).

13. The method according to Claim 12, further comprising the steps of:
inserting a plurality of nuts (1170) into said at least one slot (1060), wherein said plurality of nuts (1170) are configured such that said nuts (1170) resist the application of an outward force on said nuts (1170) through their contact with the core-side of said opening (1060A);
inserting a plurality of bolts (1156) through said plurality of conduits (1155); and
screwing said bolts (1156) into said nuts (1170), thereby creating an upward force on said nuts (1170) such that said resistance secures said support extrusion (1030) with said base extrusion (1020).

14. The method according to Claim 13, further comprising the step of:
providing a ridge (1050) in said support extrusion (1030), said ridge (1050) running the axial length of said support extrusion (1030), wherein said ridge (1050) is configured to align with at least one side of said opening (1060A), thereby ensuring that the axial length of said support extrusion (1030) is parallel to said first axial length of said planar member.

15. The method according to Claim 12, further comprising the steps of:
providing a moveable extrusion (1190); and
providing at least one guide wheel (1180) configured to rotationally couple with said track interface surface of said linear motion guide track (1010), and further configured for coupling with said moveable extrusion (1190) such that said moveable extrusion (1190) slides with respect to said linear motion guide track (1010).

## Patentansprüche

1. Ein System zum Befestigen einer Linearbewegungsführungsbahn (1010), wobei das System folgende Merkmale aufweist:
eine Linearbewegungsführungsbahn (1010), die ein steifes axiales Bauglied aufweist, bei dem eine Bahnschnittstellenoberfläche über die axiale Länge der Linearbewegungsführungsbahn (1010) verläuft;
eine Stützextrusion (1030), die folgende Merkmale aufweist:
ein axiales Bauglied, in dem zumindest eine Mulde (1035) angeordnet ist, die über die axiale Länge der Stützextrusion (1030) verläuft, und
eine Mehrzahl von Kanälen (1155), die sich durch dieselbe in einer Richtung senkrecht zu einer axialen Länge der Stützextrusion (1030) erstrecken; und
wobei das System **dadurch gekennzeichnet ist, dass** die zumindest eine Mulde (1035) einen darin angeordneten Spalt (1045) umfasst, der über die axiale Länge der Stützextrusion (1030) verläuft;
wobei die Stützextrusion (1030) ferner Folgendes aufweist:
einen Keil (1040), der ein steifes axiales Bauglied, eine erste Seite sowie eine zweite Seite aufweist, die der ersten Seite gegenüberliegt, wobei der Keil (1040) ferner Folgendes aufweist:
einen Vorsprung (1041) auf der ersten Seite des Keils (1040), der über die axiale Länge des Keils (1040) verläuft, und
eine Mehrzahl von verformbaren Zähnen (1042) auf der zweiten Seite des Keils (1040), wobei sich die Mehrzahl von verformbaren Zähnen (1042) im Wesentlichen senkrecht zur axialen Länge des Keils (1040) erstrecken;
wobei die Stützextrusion (1030) derart ausgebildet ist, dass der Spalt (1045) der zumindest einen Mulde (1035) den Vorsprung (1041) des Keils (1040) akzeptiert und der Keil (1040) die zumindest eine Mulde (1035) teilweise füllt;
wobei die Stützextrusion (1030) derart ausgebildet ist, dass die Linearbewegungsführungsbahn (1010) in die teilweise gefüllte zumindest eine Mulde (1035) pressgepasst ist, wodurch die Mehrzahl von verformbaren Zähnen (1042) derart verformt werden, dass die Linearbewegungsführungsbahn (1010) sicher in der zumindest einen Mulde (1035) gehalten wird;
wobei zumindest ein Abschnitt der Bahnschnittstellenoberfläche von der zumindest einen Mulde (1035) hervorsteht.

2. Das System gemäß Anspruch 1, das ferner folgende Merkmale aufweist:
eine Basisextrusion (1020), die zumindest ein planares Bauglied aufweist, in dem zumindest ein Schlitz (1060) angeordnet ist, wobei der zumindest eine Schlitz (1060) über eine erste axiale Länge des planaren Baugliedes verläuft, wobei der Schlitz (1060) eine Öffnung (1060A) und einen Schlitzkern (1060B) aufweist, wobei die Öffnung (1060A) enger ist als der Schlitzkern (1060B).

3. Das System gemäß Anspruch 2, das ferner Folgendes aufweist:
eine Mehrzahl von Muttern (1170), die in dem zumindest einen Schlitz (1060) eingefügt sind;
eine Mehrzahl von Bolzen (1156), die durch die Mehrzahl von Kanälen (1155) eingefügt sind und sich in den Schlitzkern (1060B) erstrecken;
wobei die Mehrzahl von Muttern (1170) derart ausgebildet ist, dass die Muttern (1170) der Ausübung einer nach außen gerichteten Kraft auf die Muttern (1170) durch ihren Kontakt mit der Kernseite der Öffnung (1060A) widerstehen;
wobei die Bolzen (1156) in die Muttern (1170) geschraubt werden, wodurch eine nach oben gerichtete Kraft auf die Muttern (1170) derart erzeugt wird, dass der Widerstand die Stützextrusion (1030) mit der Basisextrusion (1020) befestigt.

4. Das System gemäß Anspruch 3, bei dem die Stützextrusion (1030) ferner Folgendes aufweist:
einen Kamm (1050), der über die axiale Länge der Stützextrusion (1030) verläuft, wobei der Kamm (1050) sich axial entlang der Stützextrusion (1030) erstreckt, wobei der Kamm (1050) dazu ausgebildet ist, mit zumindest einer Seite der Öffnung (1060A) zu fluchten, wodurch sichergestellt wird, dass die axiale Länge der Stützextrusion (1030) parallel zu der ersten axialen Länge des planaren Bauglieds ist.

5. Das System gemäß Anspruch 2, das ferner folgende Merkmale aufweist:
eine bewegbare Extrusion (1190);
und zumindest ein Führungsrad (1180), das dazu ausgebildet ist, sich drehbar mit der Bahnschnittstellenoberfläche der linearen Linearbewegungsführungsbahn (1010) zu koppeln, und ferner dazu ausgebildet ist, sich mit der bewegbaren Extrusion (1190) derart zu koppeln, dass die bewegbare Extrusion (1190) in Bezug auf die Linearbewegungsführungsbahn (1010) gleitet.

6. Das System gemäß Anspruch 5, das ferner folgende Merkmale aufweist:
zumindest eine mit der bewegbaren Extrusion (1190) gekoppelte Bremse (1197), die dazu ausgebildet ist, Druck auf die Linearbewegungsführungsbahn (1010) auszuüben, wodurch dem Gleiten zumindest teilweise widerstanden wird.

7. Das System gemäß Anspruch 5, das ferner folgendes Merkmal aufweist:
zumindest eine Schmiervorrichtung (1196), die mit der bewegbaren Extrusion (1190) gekoppelt ist, wobei die zumindest eine Schmiervorrichtung (1196) dazu ausgebildet ist, die Linearbewegungsführungsbahn (1010) zu schmieren.

8. Das System gemäß Anspruch 5, das ferner folgendes Merkmal aufweist:
zumindest eine Radabdeckung (1194), die mit dem Führungsrad (1180) gekoppelt ist.

9. Das System gemäß Anspruch 8, wobei die zumindest eine Radabdeckung (1194) ferner ein Schmiersystem aufweist, das dazu ausgebildet ist, die Linearbewegungsführungsbahn (1010) zu schmieren.

10. Das System gemäß Anspruch 5, das ferner Folgendes aufweist:
zumindest eine zusätzliche Mulde, die auf einer gegenüberliegenden Seite der zumindest einen Mulde angeordnet ist, die über die axiale Länge der Stützextrusion (1030) verläuft, wobei die zumindest eine zusätzliche Mulde einen darin angeordneten zusätzlichen Spalt aufweist, der über die axiale Länge der Stützextrusion (1030) verläuft; und
zumindest eine zusätzliche Linearbewegungsführungsbahn, die ein steifes axiales Bauglied aufweist, bei dem eine zusätzliche Bahnschnittstellenoberfläche über die axiale Länge der zumindest einen zusätzlichen Linearbewegungsführungsbahn verläuft;
zumindest einen zusätzlichen Keil, der ein steifes axiales Bauglied aufweist, wobei derselbe ferner Folgendes aufweist:
zumindest einen zusätzlichen Vorsprung auf einer ersten Seite des zumindest einen zusätzlichen Keils, wobei derselbe über die axiale Länge des zumindest einen zusätzlichen Keils verläuft, und
zumindest eine zusätzliche Mehrzahl von verformbaren Zähnen auf einer zweiten Seite des Keils, wobei sich die zumindest eine zusätzliche Mehrzahl von verformbaren Zähnen im Wesentlichen senkrecht von der Axiallänge des zumindest einen zusätzlichen Keils erstrecken;
wobei die Stützextrusion (1030) derart ausgebildet ist, dass der zumindest eine zusätzliche Spalt der zumindest einen zusätzlichen Mulde den zumindest einen zusätzlichen Vorsprung des zumindest einen zusätzlichen Keils akzeptiert, wodurch die zumindest eine zusätzliche Mulde teilweise gefüllt wird;
wobei die Stützextrusion (1030) derart ausgebildet ist, dass die zumindest eine zusätzliche Linearbewegungsführungsbahn in die teilweise gefüllte zumindest eine zusätzliche Mulde pressgepasst ist, wodurch die zumindest eine zusätzliche Mehrzahl von verformbaren Zähnen derart verformt werden, dass die zumindest eine zusätzliche Linearbewegungsführungsbahn sicher in der zumindest einen zusätzlichen Mulde gehalten wird; und
wobei zumindest ein Abschnitt der zumindest einen zusätzlichen Bahnschnittstellenoberfläche von der zumindest einen zusätzlichen Mulde hervorsteht.

11. Ein Verfahren zum Befestigen einer Linearbewegungsführungsbahn (1010), das folgende Schritte aufweist:
Bereitstellen einer Stützextrusion (1030), die ein axiales Bauglied, in dem zumindest eine Mulde (1035) angeordnet ist, die über die axiale Länge der Stützextrusion (1030) verläuft,
wobei die zumindest eine Mulde (1035) einen darin angeordneten Spalt (1045) umfasst, der über die axiale Länge der Stützextrusion (1030) verläuft;
Bohren der Stützextrusion (1030) mit einer Mehrzahl von Kanälen (1155), die sich durch dieselbe in einer Richtung senkrecht zu einer axialen Länge der Stützextrusion (1030) erstrecken;
Einfügen eines Keiles (1040) in die zumindest eine Mulde (1035), wodurch die zumindest eine Mulde (1035) teilweise gefüllt wird; wobei der Keil (1040) Folgendes aufweist:
eine erste Seite sowie eine zweite Seite, die der ersten Seite gegenüberliegt,
ein steifes axiales Bauglied,
einen Vorsprung (1041) auf der ersten Seite des Keils (1040), der über die axiale Länge des Keils verläuft, und
eine Mehrzahl von verformbaren Zähnen (1042) auf der zweiten Seite des Keils (1040), wobei sich die Mehrzahl von verformbaren Zähnen (1042) im Wesentlichen senkrecht zur axialen Länge des Keils (1040) erstrecken;
wobei die Stützextrusion (1030) derart ausgebildet ist, dass der Spalt (1045) der zumindest einen Mulde (1035) den Vorsprung (1041) des Keils (1040) akzeptiert, wodurch die zumindest eine Mulde (1035) teilweise füllt; und
Presspassen einer Linearbewegungsführungsbahn (1010) in die teilweise gefüllte zumindest eine Mulde (1035), wobei die Linearbewegungsführungsbahn (1010) en steifes axiales Bauglied aufweist, das über die axiale Länge der Linearbewegungsführungsbahn (1010) verläuft, wodurch die Mehrzahl von verformbaren Zähnen (1042) derart verformt werden, dass die Linearbewegungsführungsbahn (1010) sicher in der zumindest einen Mulde (1035) gehalten wird; und wobei zumindest ein Abschnitt der Bahnschnittstellenoberfläche auf das Presspassen hin von der zumindest einen Mulde (1035) hervorsteht.

12. Das Verfahren gemäß Anspruch 11, das ferner folgenden Schritt aufweist:
Bereitstellen einer Basisextrusion (1020), die zumindest ein planares Bauglied aufweist, in dem zumindest ein Schlitz (1060) angeordnet ist, wobei der zumindest eine Schlitz (1060) über eine erste axiale Länge des planaren Baugliedes verläuft, wobei der Schlitz (1060) eine Öffnung (1060A) und einen Schlitzkern (1060B) aufweist, wobei die Öffnung (1060A) enger ist als der Schlitzkern (1060B).

13. Das Verfahren gemäß Anspruch 12, das ferner folgende Schritte aufweist:
Einfügen einer Mehrzahl von Muttern (1170) in den zumindest einen Schlitz (1060), wobei die Mehrzahl von Muttern (1170) derart ausgebildet ist, dass die Muttern (1170) der Ausübung einer nach außen gerichteten Kraft auf die Muttern (1170) durch ihren Kontakt mit der Kernseite der Öffnung (1060A) widerstehen;
Einfügen einer Mehrzahl von Bolzen (1156) durch die Mehrzahl von Kanälen (1155); und
Schrauben der Bolzen (1156) in die Muttern (1170), wodurch eine nach oben gerichtete Kraft auf die Muttern (1170) derart erzeugt wird, dass der Widerstand die Stützextrusion (1030) mit der Basisextrusion (1020) befestigt.

14. Das Verfahren gemäß Anspruch 13, das ferner folgenden Schritt aufweist:
Bereitstellen eines Kamms (1050) in der Stützextrusion (1030), wobei der Kamm (1050) über die axiale Länge der Stützextrusion (1030) verläuft, wobei der Kamm (1050) dazu ausgebildet ist, mit zumindest einer Seite der Öffnung (1060A) zu fluchten, wodurch sichergestellt wird, dass die axiale Länge der Stützextrusion (1030) parallel zu der ersten axialen Länge des planaren Bauglieds ist.

15. Das Verfahren gemäß Anspruch 12, das ferner folgende Schritte aufweist:
Bereitstellen einer bewegbaren Extrusion (1190); und
Bereitstellen zumindest eines Führungsrads (1180), das dazu ausgebildet ist, sich drehbar mit der Bahnschnittstellenoberfläche der linearen Linearbewegungsführungsbahn (1010) zu koppeln, und ferner dazu ausgebildet ist, sich mit der bewegbaren Extrusion (1190) derart zu koppeln, dass die bewegbare Extrusion (1190) in Bezug auf die Linearbewegungsführungsbahn (1010) gleitet.

## Revendications

1. Système de fixation d'une piste de guidage de déplacement linéaire (1010), le système comprenant:
une piste de guidage de déplacement linéaire (1010) comprenant un élément axial rigide présentant une surface d'interface de piste s'étendant sur la longueur axiale de ladite piste de guidage de déplacement linéaire (1010);
une extrusion de support (1030) comprenant
un élément axial présentant au moins un puits (1035) y disposé et s'étendant sur la longueur axiale de l'extrusion de support (1030), et
une pluralité de conduits (1155) s'étendant à travers cette dernière dans une direction perpendiculaire à ladite longueur axiale de ladite extrusion de support (1030); et
le système étant **caractérisé par le fait que**
ledit au moins un puits (1035) comporte une fente (1045) y disposée et s'étendant sur la longueur axiale de l'extrusion de support (1030);
dans lequel ladite extrusion de support (1030) comprend par ailleurs
une cale (1040) comprenant un élément axial rigide, un premier côté et un deuxième côté opposé au premier côté, la cale (1040) comprenant par ailleurs
une saillie (1041) sur le premier côté de ladite cale (1040) et s'étendant sur la longueur axiale de ladite cale (1040), et
une pluralité de dents déformables (1042) sur le deuxième côté de ladite cale (1040), ladite pluralité de dents déformables (1042) s'étendant sensiblement perpendiculairement à partir de la longueur axiale de ladite cale (1040);
dans lequel ladite extrusion de support (1030) est configurée de sorte que ladite fente (1045) dudit au moins un puits (1035) accepte ladite saillie (1041) de ladite cale (1040) et que ladite cale (1040) remplisse partiellement ledit au moins un puits (1035);
dans lequel ladite extrusion de support (1030) est configurée de sorte que ladite piste de guidage de déplacement linéaire (1010) soit introduite par pression dans ledit au moins un puits (1035) partiellement rempli, déformant ainsi ladite pluralité de dents déformables (1042) de sorte que la piste de guidage de déplacement (1010) soit maintenue de manière ferme dans ledit au moins un puits (1035); et
dans lequel au moins une partie de ladite surface d'interface de piste ressorte dudit au moins un puits (1035).

2. Système selon la revendication 1, comprenant par ailleurs:
une extrusion de base (1020) comprenant un élément plat présentant au moins une fente (1060) y disposée, ladite au moins une fente (1060) s'étendant sur une première longueur axiale dudit élément plat, où ladite fente (1060) comprend une ouverture (1060A) et un noyau de fente (1060B), où ladite ouverture (1060A) est plus étroite que ledit noyau de fente (1060B).

3. Système selon la revendication 2, comprenant par ailleurs:
une pluralité d'écrous (1170) introduits dans ladite au moins une fente (1060); et
une pluralité de boulons (1156) introduits à travers ladite pluralité de conduits (1155) et s'étendant dans ledit noyau de fente (1060B);
dans lequel ladite pluralité d'écrous (1170) sont configurés de sorte que lesdits écrous (1170) résistent à l'application d'une force vers l'extérieur sur lesdits écrous (1170) par leur contact avec le côté noyau de ladite ouverture (1060A); et
dans lequel lesdits boulons (1156) se vissent dans lesdits écrous (1170), créant ainsi une force vers le haut sur lesdits écrous (1170) de sorte que ladite résistance fixe ladite extrusion de support (1030) à ladite extrusion de base (1020).

4. Système selon la revendication 3, dans lequel ladite extrusion de support (1030) comprend par ailleurs:
une arête (1050) s'étendant sur la longueur axiale de ladite extrusion de support (1030), ladite arête (1050) s'étendant axialement le long de ladite extrusion de support (1030), où ladite arête (1050) est configurée de manière à s'aligner sur au moins un côté de ladite ouverture (1060A), assurant ainsi que la longueur axiale de ladite extrusion de support (1030) soit parallèle à ladite première longueur axiale dudit élément plat.

5. Système selon la revendication 2, comprenant par ailleurs:
une extrusion mobile (1190); et
au moins une roue de guidage (1180) configurée pour se coupler de manière rotative à ladite surface d'interface de piste de ladite piste de guidage de déplacement linéaire (1010), et configurée par ailleurs pour se coupler à ladite extrusion mobile (1190) de sorte que ladite extrusion mobile (1190) coulisse par rapport à ladite piste de guidage de déplacement linéaire (1010).

6. Système selon la revendication 5, comprenant par ailleurs:
au moins un frein (1197) couplé à ladite extrusion mobile (1190) et configuré pour appliquer une pression sur ladite piste de guidage de déplacement linéaire (1010), résistant ainsi au moins partiellement audit coulissement.

7. Système selon la revendication 5, comprenant par ailleurs:
au moins un lubrificateur (1196) couplé à ladite extrusion mobile (1190), où ledit au moins un lubrificateur (1196) est configuré pour lubrifier ladite piste de guidage de déplacement linéaire (1010).

8. Système selon la revendication 5, comprenant par ailleurs:
au moins un couvercle de roue (1194) couplé à la roue de guidage (1180).

9. Système selon la revendication 8, dans lequel ledit au moins un couvercle de roue (1194) comprend par ailleurs un système de lubrification qui est configuré pour lubrifier ladite piste de guidage de déplacement linéaire (1010).

10. Système selon la revendication 5, comprenant par ailleurs:
au moins un puits additionnel disposé sur un côté opposé dudit au moins un puits s'étendant sur la longueur axiale de l'extrusion de support (1030), où ledit au moins un puits additionnel comporte une fente additionnelle y disposée et s'étendant sur la longueur axiale de l'extrusion de support (1030);
au moins une piste de guidage de déplacement linéaire additionnelle comprenant un élément axial rigide présentant une surface d'interface de piste additionnelle s'étendant sur la longueur axiale de ladite au moins une piste de guidage de déplacement linéaire additionnelle; et
au moins une cale additionnelle comprenant un élément axial rigide, comprenant par ailleurs
au moins une saillie additionnelle sur un premier côté de ladite au moins une cale additionnelle et s'étendant sur la longueur axiale de ladite au moins une cale additionnelle, et
au moins une pluralité additionnelle de dents déformables sur un deuxième côté de ladite cale, ladite au moins une pluralité additionnelle de dents déformables s'étendant sensiblement perpendiculairement à partir de la longueur axiale de ladite au moins une cale additionnelle;
dans lequel ladite extrusion de support (1030) est configurée de sorte que ladite au moins une fente additionnelle dudit au moins un puits additionnel accepte ladite au moins une saillie additionnelle de ladite au moins une cale additionnelle, remplissant ainsi partiellement ledit au moins un puits additionnel;
dans lequel ladite extrusion de support (1030) est configurée de sorte que ladite au moins une piste de guidage de déplacement linéaire additionnelle soit introduite par pression dans ledit au moins un puits additionnel, déformant ainsi ladite au moins une pluralité additionnelle de dents déformables de sorte que ladite au moins une piste de guidage de déplacement linéaire additionnelle soit maintenue de manière ferme à l'intérieur dudit au moins un puits additionnel; et
dans lequel au moins une partie de ladite au moins une surface d'interface de piste additionnelle ressorte dudit au moins un puits additionnel.

11. Procédé de fixation d'une piste de guidage de déplacement linéaire (1010), comprenant les étapes consistant à:
prévoir une extrusion de support (1030) comprenant un élément axial présentant au moins un puits (1035) y disposé et s'étendant sur la longueur axiale de l'extrusion de support (1030),
dans lequel ledit au moins un puits (1035) comporte une fente (1045) y disposée et s'étendant sur la longueur axiale de l'extrusion de support (1030);
perforer ladite extrusion de support (1030) par une pluralité de conduits (1155) s'étendant à travers cette dernière dans une direction perpendiculaire à ladite longueur axiale de ladite extrusion de support (1030);
introduire une cale (1040) dans ledit au moins un puits (1035), remplissant ainsi partiellement ledit au moins un puits (1035), où ladite cale (1040) comprend
un premier côté et un deuxième côté opposé audit premier côté,
un élément axial rigide,
une saillie (1041) sur un premier côté de ladite cale (1040) et s'étendant sur la longueur axiale dudit ensemble de cale, et
une pluralité de dents déformables (1042) sur un deuxième côté de ladite cale (1040), ladite pluralité de dents déformables (1042) s'étendant de manière sensiblement perpendiculaire à la longueur axiale de ladite cale (1040),
dans lequel ladite extrusion de support (1030) est configurée de telle sorte que ladite fente (1045) dudit au moins un puits (1035) accepte ladite saillie (1041) de ladite cale (1040), remplissant ainsi partiellement ledit au moins un puits (1035); et
introduire par pression une piste de guidage de déplacement linéaire (1010) dans ledit au moins un puits partiellement rempli (1035), ladite piste de guidage de déplacement linéaire (1010) comprenant un élément axial rigide présentant une surface d'interface de piste s'étendant sur la longueur axiale de ladite piste de guidage de déplacement linéaire (1010), déformant ainsi ladite pluralité de dents déformables (1042) de sorte que ladite piste de guidage de déplacement linéaire (1010) soit maintenue de manière ferme dans ledit au moins un puits (1035), et
dans lequel au moins une partie de ladite surface d'interface de piste ressorte dudit au moins un puits (1035) lors de ladite introduction par pression.

12. Procédé selon la revendication 11, comprenant par ailleurs l'étape consistant à:
prévoir une extrusion de base (1020) comprenant un élément plat présentant au moins une fente (1060) y disposée, ladite au moins une fente (1060) s'étendant sur une première longueur axiale dudit élément plat, où ladite fente (1060) comprend une ouverture (1060A) et un noyau de fente (1060B), où ladite ouverture (1060A) est plus étroite que ledit noyau de fente (1060B).

13. Procédé selon la revendication 12, comprenant par ailleurs les étapes consistant à:
introduire une pluralité d'écrous (1170) dans ladite au moins une fente (1060), où ladite pluralité d'écrous (1170) sont configurés de sorte que lesdits écrous (1170) résistent à l'application d'une force vers l'extérieure sur lesdits écrous (1170) par leur contact avec le côté noyau de ladite ouverture (1060A);
introduire une pluralité de boulons (1156) à travers ladite pluralité de conduits (1155); et
visser lesdits boulons (1156) dans lesdits écrous (1170), créant ainsi une force vers le haut sur lesdits écrous (1170) de sorte que ladite résistance fixe ladite extrusion de support (1030) à ladite extrusion de base (1020).

14. Procédé selon la revendication 13, comprenant par ailleurs l'étape consistant à:
prévoir une arête (1050) dans ladite extrusion de support (1030), ladite arête (1050) s'étendant sur la longueur axiale de ladite extrusion de support (1030), où ladite arête (1050) est configurée de manière à s'aligner sur au moins un côté de ladite ouverture (1060A), assurant ainsi que la longueur axiale de ladite extrusion de support (1030) soit parallèle à ladite première longueur axiale dudit élément plan.

15. Procédé selon la revendication 12, comprenant par ailleurs les étapes consistant à:
prévoir une extrusion mobile (1190); et
prévoir au moins une roue de guidage (1180) configurée pour se coupler de manière rotative à ladite surface d'interface de piste de ladite piste de guidage de déplacement linéaire (1010), et configurée par ailleurs pour se coupler à ladite extrusion mobile (1190) de sorte que ladite extrusion mobile (1190) coulisse par rapport à ladite piste de guidage de déplacement linéaire (1010).
